(19) Europäisches Patentamt
European Patent Office
Office européen des brevets

(11) **EP 0 491 813 B1**

(12) **EUROPEAN PATENT SPECIFICATION**

(45) Date of publication and mention
of the grant of the patent:
**09.12.1998 Bulletin 1998/50**

(21) Application number: **90914102.0**

(22) Date of filing: **14.09.1990**

(51) Int. Cl.$^6$: **A01N 25/10**

(86) International application number:
**PCT/AU90/00422**

(87) International publication number:
**WO 91/03940 (04.04.1991 Gazette 1991/08)**

(54) **BIODEGRADABLE CONTROLLED RELEASE MATRICES**

BIOABBRECHBARE MATRIZEN MIT GEREGELTER VERABREICHUNG

MATRICES BIODEGRADABLES DE LIBERATION REGULEE

(84) Designated Contracting States:
**AT BE CH DE DK ES FR GB IT LI LU NL SE**

(30) Priority: **15.09.1989 AU 6411/89**

(43) Date of publication of application:
**01.07.1992 Bulletin 1992/27**

(73) Proprietors:
• **GOODMAN FIELDER WATTIE AUSTRALIA LIMITED**
**Sydney, NSW 2000 (AU)**
• **INCITEC LTD**
**Gibson Island, Murarrie, QLD 4172 (AU)**

(72) Inventor:
**KNIGHT, Adrian, Timothy**
**Lane Cove, NSW 2066 (AU)**

(74) Representative:
**Baldock, Sharon Claire et al**
**BOULT WADE TENNANT,**
**27 Furnival Street**
**London EC4A 1PQ (GB)**

(56) References cited:
WO-A-85/04074          AU-A- 2 887 689
DE-A- 3 939 721         GB-A- 2 178 658
US-A- 4 133 784

• **PATENTS ABSTRACTS OF JAPAN, C-167, page 130, JP,A, 58-39602 (NITTO DENKI KOGYO K.K.) 3 August 1983 (03.08.83).**
• **Industrial and Engineering Chemical Research, Vol. 26, No. 8, 1987, pages 1659-1663; published by American Chemical Society (U.S.A.) F.H. OTEY et al: "Starch-Based Blown Films. 2". See pages 1659 and 1661.**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

This invention relates to a biodegradable matrix, and more particularly to a matrix suitable for controlled release of an agriculturally active agent into an environment or for controlled rate of biodegradation. The invention also relates to a method for manufacture of the matrix and to the use of the matrix in agriculture.

BACKGROUND ART

In agriculture it is desirable to release fertilizers, pesticides, herbicides or the like active agents to the soil at a controlled rate over a prolonged period. Depending on the type of active agent and the agricultural requirement, the period of release may be desirably a period of weeks, months or years. Furthermore, it is sometimes desirable that the active agent be released at an initially high rate and then at a slower rate.

It has been practised to prepare copolymers comprising a synthetic polymer as the major component with minor amounts of starch as absorbants. These grafted polymers are used in agriculture for example, as a coating for seeds. The polymer absorbs water and holds it at the seed surface, thus increasing both the rate of germination and the percentage of the total number of planted seeds which germinate. Examples include starch polyacrylates, starch acrylonitriles, starch polyethylenes, starch-vinyl copolymers and the like.

Similarly, it is known to manufacture so called biodegradable films from synthetic polymers for use in for example agriculture as mulch films. Some of these films include starch as a minor component.

However, in general, the starch-synthetic copolymer compositions and synthetic films suffer from the disadvantage that they are not truly biodegradable. Disadvantageously, when the composition disintegrates, the synthetic organic residue remains as an environmental pollutant.

It has also been practiced to encapsulate active agents so that an inner core of the toxic agent is surrounded by a polymeric matrix. The polymeric matrix may include starch. These products form a sponge like structure which holds the active ingredient when dry but releases it upon wetting. Release is generally effected by the rupture of the enveloping membrane. Accordingly, although these materials may be fully biodegradable, it is difficult to control the rate of release and also to control the rate of degradation. The production of such incorporated agents involves complex and critical manufacturing steps.

EP-A-0327505 discloses a biodegradable matrix for use as a carrier of an agriculturally active ingredient. The matrix is formed by preparing a hot melt of amylaceous material, water and synthetic polymer at a temperature of 80-200°C. This matrix, however, does not controllably release the active ingredient into an environment at a predetermined rate, which can be varied independent of the rate of degradation of the matrix.

The present invention stems from the surprising and unexpected discovery that an active ingredient can be controllably released into an environment at a predetermined rate from a biodegradable matrix based on a starch derived material and that the release rate of the active ingredient can be varied independently of the rate of degradation of the matrix.

The biodegradable matrix of the invention has been developed primarily for use in agriculture and will be described hereinafter with reference to that application. However, it will be appreciated that the invention is not limited to that particular field of use.

Therefore, according to a first aspect of the present invention there is provided a method for manufacture of a controlled release biodegradable matrix shape containing an agriculturally active agent subject to controlled release, said method comprising the steps of:

(a) heating at a temperature of no more than about 150°C and subjecting to pressure a composition having a water content of from 2 to 30% w/w and comprising an amylaceous material having an amylose content of at least 50% by weight and selected from the group consisting of maize starch and pea starch or a derivative of said amylaceous material selected from the group consisting of amylaceous ethers, esters or a combination thereof, preferably cross-linked amylaceous ethers and esters; amylaceous alkyl succinates and starch molecules having synthetic polymer branches grafted thereon or a combination of said amylaceous material and a derivative thereof and water; so as to provide a uniform melt,

(b) forming the hot melt into a desired matrix shape, step (a) or step (b) further comprising including a filler in an amount of less than about 95% by weight from 0 to less than or equal to 90% by weight of a synthetic polymer and optionally a plasticizer, if synthetic polymer is present, in an amount of about 20% by weight or less, and

(c) incorporating the agent in the matrix shape, the composition and forming conditions of the matrix shape being selected so as to provide a predetermined rate of biodegradation whilst the concentration and type of filler is selected so as to provide a controlled rate of release of said agent independent of said rate of biodegradation.

A "derivative" of amylaceous material means a chemically modified amylaceous material selected from the group consisting of amylaceous material as defined above.

"Synthetic polymer" includes non-naturally occurring polymers such as those used for plastics and elastomers and the term includes within its scope both thermoplastic and thermosetting polymers.

The term "forming" in relation to the hot melt includes the formation of films, rods, strands, sheets, pellets or the like and includes, as the context admits, extrusion through a die head and in a blow moulding machine.

The active agent may advantageously be incorporated into the matrix shape by incorporating it in the composition in step (a) or alternatively by adding it to the hot melt prior to or during step (b) or following formation of the matrix shape. The hot melt may be formed into the desired matrix shape by, for example, extrusion.

Preferably, the method according to the first aspect of the present invention further comprises the step of (d) subjecting the hot melt to an atmospheric or sub-atmospheric pressure immediately prior to or during step (b) whereby to remove water from the hot melt prior to the formation of the matrix shape.

Advantageously by modifying the basic starch used, according to the first aspect of the invention it is possible to confer different properties on the final matrix shape. A large number of derivatives of amylaceous materials are suitable for use in the present invention.

When the derivative of the amylaceous material according to the invention comprises amylaceous ethers, they preferably comprise one or more of a hydroxyalkyl derivative or carboxyalkyl derivative and preferably hydroxyethyl, hydroxypropyl, hydroxybutyl or carboxymethyl. Where amylaceous esters are used they preferably comprise either a saturated fatty acid derivative, such as an acetyl or succenyl derivative. Where amylaceous alkyl succinates are used they preferably comprise starch octenyl succinate, which advantageously confers a degree of hydrophobicity to the finished composition. Carboxymethylated hydroxypropylated and acetylated high amylose modified maize starch derivatives are preferably used.

Where a high amylose maize starch is used, it is desirable to select a high amylose maize starch or modified starch derived from the Goodman Fielder Mills Pty Ltd maize hybrids 55/77 or 65/88 described in detail in the Applicant's co-pending application no. PCT/AU90/00237 incorporated herein by cross-reference.

By selecting the starch modification, the mechanical properties of the matrix shape may be varied. For example, the selection of an acetylated high amylose starch having an acetyl value of about 2.5% or a hydroxypropylated high amylose starch having a hydroxypropyl value of up to about 3% allows higher processing temperatures to be utilized thereby resulting in films having improved handling characteristics in that the hot melt is less fluid and more rubbery in nature. Carboxymethylated starch derivatives having a carboxyl value of about 2% are also particularly suitable for use in the present invention.

The method according to the invention may further comprise a step (e) crosslinking amylaceous material or a derivative thereof during or after step (b). In such case, modification may be achieved by using a crosslinking agent such as sodium trimetaphosphate. Cross bonded high amylose maize starch and cross bonded common wheat starch are particularly suitable modifications for use in the present invention. The amylaceous material may be precrosslinked, that is be crosslinked prior to or during conversion to the hot melt. However, preferably, the amylaceous material is crosslinked during forming and more preferably after forming by any suitable method readily understood by those skilled in the art. For example, in one embodiment the matrix shape is extruded into a bath comprising the crosslinking agent, saturation allowed to take place and the matrix removed and allowed to dry and cure.

The nature of the crosslinking agent and the stage at which the crosslinking agent is incorporated into the amylaceous material effects such physical properties of the matrix shape as biodegradability, release rate, flexibility, strength, surface finish and colour.

For a uniform hot melt phase to form an amount of water in the composition of from 2 to 30% w/w is required. It is emphasised that these amounts represent the total amount of water in the composition used to form the hot melt and not the amount of added water. In fact, amylaceous material as normally dried in preparation typically comprises from 9 to 20% by weight of water and as such, the residual moisture inherent in the amylaceous material may be sufficient to enable the conversion of the composition into a hot melt and additional water need not be added or be added in small quantities only. However, preferably, water is added in an amount of less than 20% by weight and most preferably from about 5% to about 15% by weight.

The amount of water may be selected so as to modify the physical properties of the final product. For example, the higher the water content, the higher the flexibility and the lower the strand strength of the matrix shape.

In a preferred embodiment of the invention the method may further comprise including a synthetic polymer in the composition of step (a). Preferably, the composition of step (a) comprises less than about 25% by weight of synthetic polymer, and more preferably less than about 15% by weight is added because generally the larger the synthetic polymer component the slower the degradation rate for the matrix shape.

The addition of synthetic polymers during the preparation of the biodegradable matrix shape advantageously affects both the performance and processing of the matrix. The synthetic polymer may be added to the composition before processing to a hot melt. Alternatively, the synthetic polymer may be applied to the matrix shape itself during forming by way of co-forming or alternatively, the matrix shape may be coated immediately after forming, for example by way of spraying, brushing or dipping. The co-forming technique employed may be any one of those currently used in the plastic industry for example thermal lamination, co-injection or co-extrusion using the cast (flat die) method or strand die method or in blown film production.

The inclusion of a synthetic polymer in the biodegradable matrix shape advantageously results in a more absorbent product for some active agents and a matrix shape having a greater shelf life stability.

The synthetic polymer may be any conventional thermoplastic or thermosetting polymer but is preferably selected from the group consisting of polyethylene (including low density polyethylene, linear low density polyethylene and high density polyethylene), a copolymer of ethylene vinyl acetate, a copolymer of ethylene acrylic acid, polyvinyl chloride, polystyrene, chlorinated polyethylene, a copolymer of ethylene propylene a copolymer of acrylic acid, a copolymer of polyvinyl acetal, polyamines and urethanes. Most preferably, the synthetic polymer is thermoplastic and is low density polyethylene, linear low density polyethylene, or high density polyethylene; an ethylene vinyl acetate copolymer having a vinyl acetate content of from 5% to 40% W/W and melt flow index of from 0.5 to 400 g/10 minute as determined by the ASTM test D1238; or polyvinyl chloride or chlorinated polyethylene having a chlorine content of from 20% to 50% W/W.

Advantageously where an ethylene vinyl acetate starch copolymer is used, a two phase system forms in the cooled matrix. The presence of these two apparently continuous phases of starch and synthetic polymer results in a very high surface area honeycomb of the ethylene vinyl acetate phase once the starch phase has degraded. Further, the phase separation/compatibility may be adjusted by modifying the side chain components of the modified starches.

The synthetic polymer may be selected to modify or decrease both the biodegradation rate of the matrix shape and the release rate of the active agent. The addition of a synthetic polymer to the matrix also advantageously affects the mechanical properties of the finished article. For instance, at the 10% by weight addition level both chlorinated polyethylene and polyvinyl chloride increase strand strength and flexibility of the final matrix shape. Conversely, at the 10% by weight addition level, ethylene vinyl acetate copolymers decrease strand strength yet increase flexibility. Both strand strength and flexibility are advantageous for the purposes of handling and storage of the finished product as matrices exhibiting these properties tend to retain their shape and integrity.

The addition of a filler to the composition of step (a) advantageously serves to modify processing and performance characteristics of the hot melt and final product. Preferably the filler may be added to the composition prior to or during step (b), according to the invention. Preferably, the filler comprises less than about 70% by weight of the composition. When the filler is added prior to or during step (b), the amount of filler added is less than about 70% by weight of the hot melt. Water soluble, water insoluble, organic, inorganic, ionic and non-ionic fillers are suitable for use in the present invention. Preferably, the selected filler is non-toxic to the environment. In a preferred embodiment of the invention the filler is selected from the group consisting of metal salts, clays, carbonaceous materials, dextrose, talcs, silicas and ammonium sulphate. Preferably, the metal salt is calcium carbonate, calcium sulphate, sodium carbonate, sodium sulphate or barium sulphate. The clay may be preferably kaolin or bentonite and the carbonaceous material may be wood flour.

Preferably the composition of step (a) further comprises plasticizer and preferably in an amount of 20% by weight or less. The plasticizer advantageously improves both the extrusion characteristics of the hot melt and the physical properties of the matrix shape. The plasticizer may be added to the composition prior to or during step (b). Generally, any known plasticizer can be utilized in the present invention. However, specific examples of suitable plasticizers include mono or polyfunctional alcohols. Preferably the plasticizer comprises any of polyethylene glycol, acetyl glycol, glycerol, invert sugar, dioctyl phthalate, vegetable oils (preferably soya bean oil), chlorinated hydrocarbons or combinations thereof.

In order for the hot melt to form, the amylaceous containing composition must be subjected to elevated temperatures and pressure. The temperatures best suited for this conversion are from about 70°C to 200°C depending on the formulation. Where the matrix shape is formed without vacuum venting, the preferred temperature is about 90°C in all heating zones. However, where the active agent has been incorporated before or during processing, the conversion and forming steps respectively are preferably performed below the temperature at which the active agent breaks down. Where the active agent is incorporated with the matrix shape after forming, higher processing temperatures may be used providing the matrix shape is cooled or allowed to cool prior to incorporating the active agent therewith. The preferred pressure for conversion of the amylaceous containing composition to a hot melt is from about $4.1368 \times 10^5$ Pa (60 psi) to about $1.379 \times 10^7$ Pa (2000 psi).

In one embodiment, the hot melt is subjected to a reduced pressure immediately prior to the forming step to remove water and other volatiles from the hot melt. This step is especially desirable where the melt is to be extruded as a film. Desirably, the reduced pressure is in the form of a vacuum stripping step at a pressure of for example less than $2 \times 10^4$

Pa (200 mbar). Alternatively, the hot melt is subjected to a series of reduced pressures prior to the forming step to sequentially remove a portion of the water and other volatiles from the hot melt at each venting step.

The hot melt is then formed into the desired matrix shape by any conventional process such as dies or rolls into any desired size or shape including pellets, chips, ribbons, films and the like.

The method according to the invention may further comprise the steps of:

(f) heating at a temperature of no more than about 150°C and subjecting to pressure a composition comprising the matrix shape from step (b) and water, said composition having a water content of no more than about 30% w/w, whereby to provide a uniform hot melt included in the matrix shape; and

(g) extruding the hot melt of step (f) to form a further matrix shape.

Preferably, the active agent is added in powder or liquid form to the composition of step (a) prior to the conversion to the hot melt. Alternatively, the active agent may be blended (by for example, immersion or infusion) or in the matrix shape from step (b) or step (g).

If desired, some or all of the optional ingredients such as synthetic polymers, fillers, plasticizers and the like hitherto described may be added before, during or after this second processing step in accordance with the teachings set forth above.

Preferably, the active agent is incorporated during the final forming step when the active ingredient may be intimately mixed with the hot melt.

The active agent is preferably selected from the group comprising acaricides, insecticides, nematicides, herbicides, trace nutrients, plant growth regulants, fertilizers, fungicides or the like, or a combination thereof.

Representative examples of acaricides, insecticides and nematicides known to those skilled in the art include the following available chemicals, expressed by common name: cadusafos, carbofuran, carbosulfan, chlorfenvinphos, chlormephos, chlorpyrifos, chlorpyrifos-methyl, cloethocarb, cyhalothrin, deltamethrin, alphamethrin, dicrotophos, disulfoton, endosulfan, ethiofencarb, ethoprophos, fenamiphos, fensulfothion fonofos, furathiocarb, isazofos, methomyl, monocrotophos, oxamyl, parathion-methyl, parathion, phorate, pirimicarb, pirimiphos ethyl, pirimiphos methyl, quinalphos, tefluthrin, temephos, terbufos.

Herbicides to be used in the composition of the present invention depend on the plant desired to be destroyed. Therefore, the class of herbicides known to those skilled in the art for destroying undesirable plants are active agents within the concept of the present invention. Representative examples of herbicides, expressed by common name, include the following:

ametryn, amitrole, atrazine, bromoxynil, chlorsulfuron, cyanazine, 2,4-D and elated compounds, desmethryn, di-allate, diquat, diuron, EPTC glyphosate linuron, MCPA and derivatives, metolachlor, metribuzin, paraquat, pendimethalin, picloram, simazine, terbutryn, triallate, triclopyr, trifluralin.

Similarly, the fungicides to be used in the composition of the present invention depends upon on the fungi desired to be destroyed. Representative examples of fungicides known to those skilled in the art and suitable for use in the present include the following expressed by common name: benalaxyl, benomyl, chlorothalonil, etridiazole, fosetyl, phosphoric acid and its salts and derivatives, imazalil, metalaxyl, pyrazophos, quintozene, triadimefon.

Specific examples of plant growth regulants, that is compounds especially formulated to make a specific portion of the plant grow faster than others, and other compounds suitable for incorporation with the matrix shape include:

chlormequat, nitrapyrin, paclobutrazol, urea, monoammonium phosphate, diammonium phosphate, chelated trace elements, trace nutrients, potassium sulphate, ammonium sulphate, potassium ammonium sulphates.

Suitable trace nutrients include those compounds recognised as essential or desirable for healthy plant growth and include amongst others, oxides and salts of trace elements utilized by plants.

The nature of the active agent may be selected on the basis of the desired release rate of the final biodegradable composition.

According to a second aspect of the present invention there is provided a controlled release biodegradable composition comprising a matrix formed by heating at a temperature of no more than about 150°C and subjecting to pressure, a composition having a water content of from 2 to 30% w/w and comprising an amylaceous material having an amylose content of at least 50% by weight and selected from the group consisting of maize starch and pea starch or a derivative of said amylaceous material selected from the group consisting of amylaceous ethers, esters or a combination thereof, preferably cross-linked amylaceous ethers and esters; amylaceous alkyl succinates and starch molecules having synthetic polymer branches grafted thereon or a combination of said amylaceous material and derivative thereof, and water; to provide a uniform melt; from 0 to less than or equal to 25% by weight of a synthetic polymer; an agriculturally active agent subject to controlled release and selected from the group consisting of acaricides, insecticides, nematicides, herbicides, fungicides, plant growth regulants, fertilizers, trace nutrients or a combination thereof; from 0 to 20% w/w of plasticizer if synthetic polymer is present and a filler in an amount of less than about 95% by weight, the composition and forming conditions of the matrix being selected so as to provide a predetermined rate of biodegradation whilst the concentration and type of filler is selected so as to provide a controlled rate of release of said agent independent of said rate of biodegradation.

Preferably, the matrix comprises less than or equal to about 15% by weight synthetic polymer.

The amylaceous material or derivative thereof and synthetic polymer may be any one of the products already described above. Additionally, the matrix may include other optional ingredients such as fillers, plasticizers, weighting agents, U.V. stabilizers, pore structure modifiers and the like, the nature of which has been discussed previously.

The biodegradable matrix shapes and compositions according to the invention are particularly suitable for use in agriculture where they are applied for example, as pellets or ribbons to a crop growing area to improve plant growth and yield over an extended period of time. The matrix shapes and compositions may be applied on top of the soil but desirably, they are applied within the soil. They may be applied to the crop growing area by any conventional means including ploughing, tilling, banding, cultivating, furrowing and the like.

The release of the active agent from the biodegradable matrix is thought to be effected by two main mechanisms, diffusion through the matrix and by leaching through pores either inherent in the matrix or induced by the leaching out of soluble salts during service. Further, as the matrix is itself degrading during service, variations in the matrix surface area exposed to the environment also affects the rate of release indirectly so the release rate of the active agent may be controlled to an extent by controlling the rate of biodegradation of the matrix.

The invention may be more clearly understood from the following description of examples thereof which are given by way of example only, with reference to the accompanying figures wherein cumulative % weight loss is shown on the y axis, time of incorporation in soil (days) is shown on the x axis, soil temperature is shown in degrees Celsius and soil moisture represented by the symbols FP, H, M and L wherein FP represents a flood plot where excess water is present, H represent a high soil moisture content of from 26% to 40% by weight, M represents a medium soil moisture content of from 6% to 20% by weight and L represents a low moisture content of from 3% to 17.6% by weight.

Figures 1 to 4 show the effect of soil moisture and soil temperature on the degradation rate of a biodegradable matrix according to the invention.

Figure 5 shows the effect on the degradation rate of the addition of a crosslinking agent to the amylaceous material during or after forming into a matrix shape.

Figures 6 and 7 show the effect of product shape on the degradation rate of the matrix.

Figures 8 to 10 show the effect of the incorporation of synthetic polymers on the degradation rate of the matrix.

Figures 11 and 12 show the effect of the incorporation of fillers on the degradation rate of the biodegradable matrix.

Figure 13 shows the variation in the release rate of the active agent that may be obtained by the selection of carbosulfan, chlorpyrifos or phorate.

Figure 14 shows the effect of the introduction of an active agent on the degradation rate of the biodegradable matrix.

Figure 15 shows the release rate of the active agent from those matrices from figure 14 including an active agent.

Figure 16 shows the effect of the addition of 9% filler $[(NH_4)_2SO_4]$ on the release rate of the active agent.

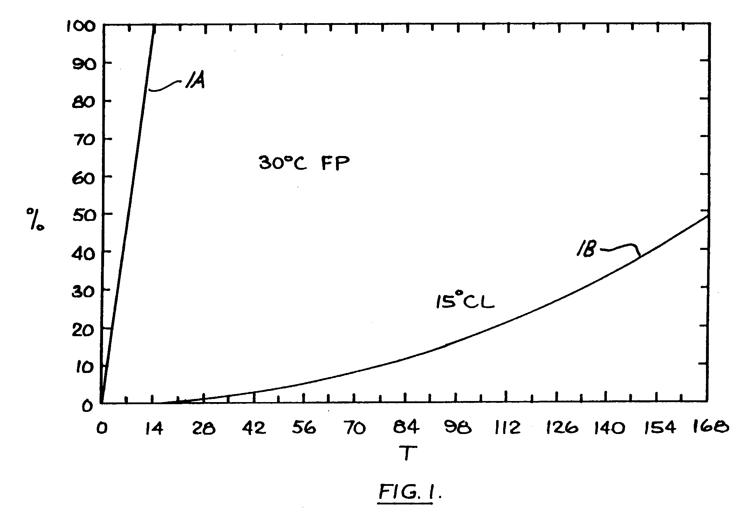

The formulations represented by figures 1 to 16 are depicted in the following table.

TABLE 1

| % W/W OF FORMULATION | 1A | 1B | 2A | 2B | 3A | 3B | 3C | 4A | 4B | 5A | 5B |
|---|---|---|---|---|---|---|---|---|---|---|---|
| A877[1] | 63.0 | | 72.1 | 72.1 | | | | | | 56.6 | 56.6 |
| Gelose 50[2] | | 62.0 | | | 52.8 | 52.8 | 52.8 | 62.0 | 62.0 | | |
| Gelose 22[3] | | | | | | | | | | | |
| $H_2O$ | 15.6 | 30.0 | 16.1 | 16.1 | 25.5 | 25.5 | 25.5 | 30.0 | 30.0 | 13.5 | 9.9 |
| Glycerol | 11.4 | 8.0 | 11.8 | 11.8 | 6.8 | 6.8 | 6.8 | 8.0 | 8.0 | 10.8 | 10.8 |
| Dextrose | 10.0 | | | | | | | | | | |
| Omyacarb 10[4] | | | | | | | | | | | |
| $BaSO_4$ | | | | | | | | | | | |
| $(NH_4)_2SO_4$ | | | | | | | | | | | |
| Kaolin | | | | | | | | | | | |
| EVA[5] | | | | | 14.9 | 14.9 | 14.9 | | | | |
| Sodium Trimeta Phosphate | | | | | | | | | | | 3.6 |
| $NaHCO_3$ | | | | | | | | | | 9.0 | 9.0 |
| Active Agent 1[6] 2[7] 3[8] | | | | | | | | | | 10.1 | 10.1 |
| CPE[9] | | | | | | | | | | | |

Table 1 - Continued

| % W/W OF FORMULATION | 6A | 6B | 7A | 7B | 8A | 8B | 8C | 8D | 9A | 9B | 9C |
|---|---|---|---|---|---|---|---|---|---|---|---|
| A877[1] | 56.6 | 56.6 | | | 72.1 | 63.0 | 31.4 | 7.8 | 72.1 | 63.0 | 31.4 |
| Gelose 50[2] | | | | | | | | | | | |
| Gelose 22[3] | | | 64.7 | 64.7 | | | | | | | |
| $H_2O$ | 9.9 | 9.9 | 14.4 | 14.4 | 16.1 | 15.6 | 7.8 | 2.0 | 16.1 | 15.6 | 7.8 |
| Glycerol | 10.8 | 10.8 | 10.6 | 10.6 | 11.8 | 11.4 | 5.7 | 1.4 | 11.8 | 11.4 | 5.7 |
| Dextrose | | | | | | | | | | | |
| Omyacarb 10[4] | | | | | | | | | | | |
| $BaSO_4$ | | | | | | | | | | | |
| $(NH_4)_2SO_4$ | | | | | | | | | | | |
| Kaolin | | | | | | | | | | | |
| EVA[5] | | | | | | 10.0 | 55.1 | 88.8 | | 10.0 | 55.1 |
| Sodium Trimeta Phosphate | 3.6 | 3.6 | | | | | | | | | |
| $NaHCO_3$ | 9.0 | 9.0 | | | | | | | | | |
| Active Agent 1[6] 2[7] 3[8] | 10.1 | 10.1 | 10.3 | 10.3 | | | | | | | |
| CPE[9] | | | | | | | | | | | |

Table 1 - Continued

| % W/W OF FORMULATION | 9D | 10A | 10B | 11A | 11B | 11C | 11D | 11E | 13A | 13B | 13C |
|---|---|---|---|---|---|---|---|---|---|---|---|
| A877[1] | 7.8 | 63.0 | 63.0 | 72.1 | 63.0 | 63.0 | 63.0 | 63.0 | | | |
| Gelose 50[2] | | | | | | | | | | | |
| Gelose 22[3] | | | | | | | | | 64.7 | 63.8 | 64.5 |
| $H_2O$ | 2.0 | 17.6 | 17.6 | 16.1 | 15.6 | 15.6 | 15.6 | 15.6 | 14.4 | 14.2 | 14.4 |
| Glycerol | 1.4 | 9.4 | 9.4 | 11.8 | 11.4 | 11.4 | 11.4 | 11.4 | 10.6 | 10.4 | 10.5 |
| Dextrose | | | | | | | | | | | |
| Omyacarb 10[4] | | | | | | | 10.0 | | | | |
| $BaSO_4$ | | | | | 10.0 | | | | | | |
| $(NH_4)_2SO_4$ | | | | | | 10.0 | | | | | |
| Kaolin | | | | | | | | 10.0 | | | |
| EVA[5] | 88.8 | | | | | | | | | | |
| Sodium Trimeta Phosphate | | | | | | | | | | | |
| $NaHCO_3$ | | | | | | | | | | | |
| Active Agent 1[6] | | | | | | | | | 10.3 | | |
| 2[7] | | | | | | | | | | 11.6 | |
| 3[8] | | | | | | | | | | | 10.6 |
| CPE[9] | | 10.0 | 10.0 | | | | | | | | |

Table 1 - Continued

| % W/W OF FORMULATION | 14A | 14B | 14C | 15A | 15B | 16A | 16B |
|---|---|---|---|---|---|---|---|
| A877[1] | | | | | | | |
| Gelose 50[2] | 47.9 | 52.8 | 47.3 | 47.9 | 47.3 | | |
| Gelose 22[3] | | | | | | 63.8 | 55.7 |
| $H_2O$ | 23.1 | 25.5 | 22.8 | 23.1 | 22.8 | 14.2 | 13.8 |
| Glycerol | 6.2 | 6.8 | 6.1 | 6.2 | 6.1 | 10.4 | 10.1 |
| Dextrose | | | | | | | |
| Omyacarb 10[4] | | | | | | | |
| $BaSO_4$ | | | | | | | |
| $(NH_4)_2SO_4$ | | | | | | | 8.8 |
| Kaolin | | | | | | | |
| EVA[5] | 13.5 | 14.9 | 13.4 | 13.5 | 13.4 | | |
| Sodium Trimeta Phosphate | | | | | | | |
| $NaHCO_3$ | | | | | | | |
| Active Agent 1[6] | 9.3 | | | 9.3 | | | |
| 2[7] | | | 10.4 | | 10.4 | 11.6 | 11.6 |
| 3[8] | | | | | | | |
| CPE[9] | | | | | | | |

1. A877 – Acetylated high amylose maize starch.

2. Gelose 50 – High amylose maize starch.

3. Gelose 22 – Hydroxypropylated high amylose maize starch.

4. Omyacarb 10 – One grade of $CaCO_3$ (filler).

5. EVA – Ethylene vinyl acetate copolymer (20% vinyl acetate content).

6. Chlorpyrifos.

7. Carbosulfan.

8. Phorate.

9. Chlorinated Polyethylene (36% Cl Content).

All formulations in table 1 were preblended to form a free flowing uniform mixture and extruded through a twin screw, co-rotating, intermeshing extruder having six barrel segments each with separate heating and cooling supply and a die containing an additional two heating zones. The extruder screws were of constant root diameter with an constant diameter ratio of 25:1.

The initial moisture content and active agent content of each matrix was determined and the matrix sample incorporated in soil. Said samples were analysed at periodic intervals for weight loss and active agent loss.

Degradation of the samples were calculated as follows:

$$\text{Total weight Loss} = 100 - \frac{[\text{Dry Weight Retrieved}}{\text{Dry Weight Established}} \times 100\%]$$

$$= 100 - \frac{[(\text{Sample Weight x Moisture Content) Retrieved}}{(\text{Sample Weight x Moisture Content) Established}} \times 100\%$$

Release rates were calculated as follows:

$$\text{Release Rates} = 100 - \frac{[(\text{Sample Weight x Active Content) Retrieved}}{(\text{Sample Weight x Active Content) Established}} \times 100\%$$

Figures 1 to 4 show the variation in the degradation rate of typical matrix formulations as a function of soil moisture and temperature.

From the results obtained, it is evident that the release rates and biodegradation rates of the matrices according to the invention are affected by both their solubility in water and soil temperature.

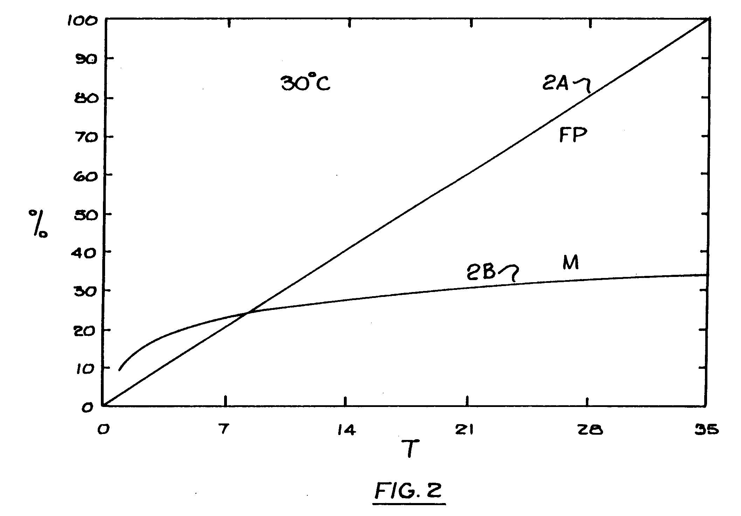

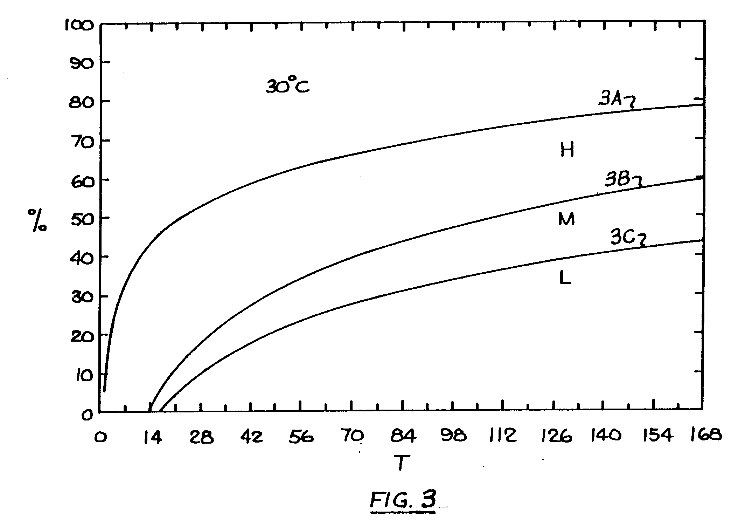

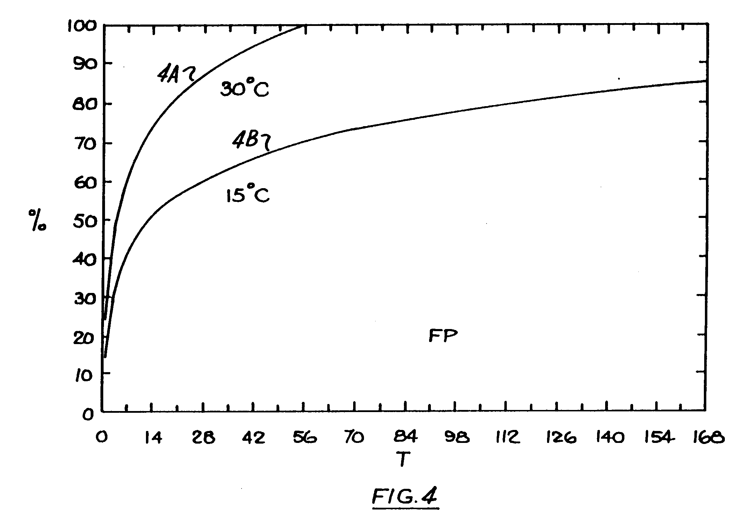

Figure 1 shows the large difference in degradation rate and total weight loss obtainable over a period of 168 days for two formulations 1A and 1B under vastly different soil conditions, that is in a flood plot at 30°C and a low moisture soil at 15°C. Figures 2 and 3 show typical degradation rates and total weight losses exhibited by a third formulation under flood plot (2A) and medium moisture conditions (2B) at a constant temperature of 30°C over a period of 35 days. Figure 3 compares the degradation rates and total weight losses exhibited by a fourth formulation over 168 days at 30°C in high (3A), medium (3B) and low (3C) soil moisture conditions. Figure 4 compares the degradation rates and total weight losses exhibited by the formulation shown in figure 1 as 1B at two soil temperatures [30°C (4A) and 15°C (4B)] but under constant soil moisture conditions. From these results it is evident that the higher the soil temperature and moisture content, the greater the amount and the faster the rate of degradation of the matrix over the specified time period.

Nevertheless, by modifying the solubility of the matrix it is possible to alter both the release rate of the active agent and the degradation rate of the matrix independently of soil conditions. For example, the release rate may be reduced by the selection of specific starch modifications which alter the hydrophobicity of the starch thereby preventing or deterring the dissolution of the starch matrices in wet environments or by modifying the starch by the introduction of active groups onto the starch chains which interact with the active agent thereby slowing down the leach out rate.

Conversely, the selection of a modified starch having reduced chain lengths induced, for example, by acid or enzyme modification, will result in a matrix exhibiting an increased rate of release.

The selection of a precrosslinked amylaceous material for subsequent conversion to the hot melt yields, after forming, a matrix shape which exhibits a relatively fast rate of release and degradation. This is somewhat surprising because crosslinked starches are typically more resistant to degradation and it is believed that this property is adversely affected by the forming step of extrusion. Conversely, where the amylaceous material is cross linked during or after the forming step, the resulting matrix shape exhibits a slower rate of release and degradation. It is believed that this change in degradation and release rate is attributable to formation of an internally cross linked continuous phase when the amylaceous material is cross linked during or after forming and that this continuous phase is less susceptible to degradation. Conversely, it is thought that the use of a precrosslinked amylaceous material results in a matrix shape having a series of cross linked phases which are more susceptible to degradation.

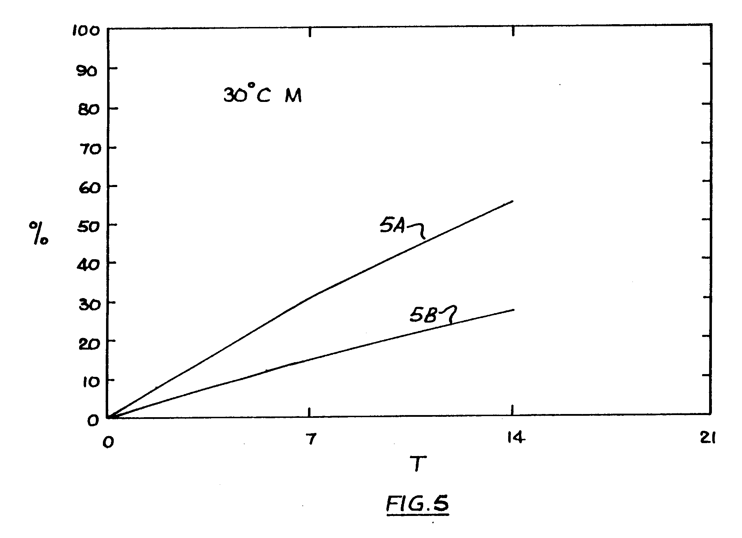

Figure 5 shows the effect of cross linking on the degradation rate and total weight loss exhibited by two matrices over a period of 14 days at a constant soil temperature (30°C) and moisture condition (medium). The amylaceous material of matrix 5A is not crosslinked whereas the amylaceous material 5B was crosslinked after extrusion by the addition of sodium trimetaphosphate. From this figure it is evident that the degradation rate of a matrix may be reduced by the addition of a crosslinking agent after extrusion.

The selection of certain processing conditions will also affect the properties of the amylaceous material and therefore, the release rate of the active agent. For example, by increasing the rate of shear during processing, the resulting biodegradable matrix will have shorter chains, a more degraded structure and will therefore release the incorporated active agent at a faster rate.

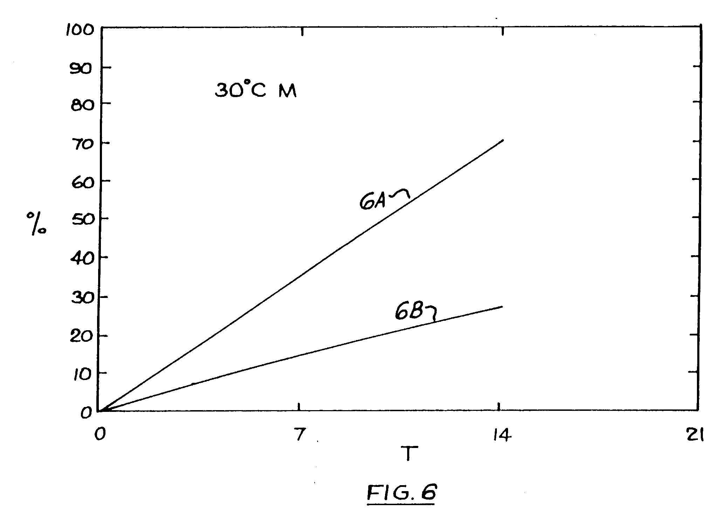

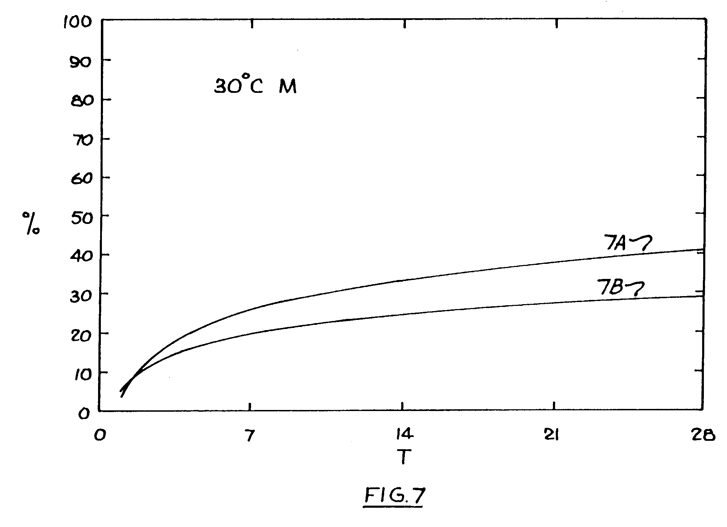

The shape of the matrix will affect its degradation rate and therefore, to an extent, the release rate of the active agent therefrom as shown by figures 6 and 7 wherein matrix shapes 6A and 7A have a larger surface area than matrix shapes 6B and 7B respectively. From these figures it is evident that the larger the surface area to volume ratio of the matrix shape, the greater the degradation rate over the specified time period.

The incorporation of a synthetic polymer with the amylaceous material or matrix shape affects both the release rate and biodegradation rate of the matrix. It is thought that the synthetic polymers affect the intermolecular voids in the matrix and thereby, the rate of diffusion and leaching out of the active agent. It is also thought that they affect the mechanical properties of the starch molecules thereby effecting the strength and solubility of the matrix shape.

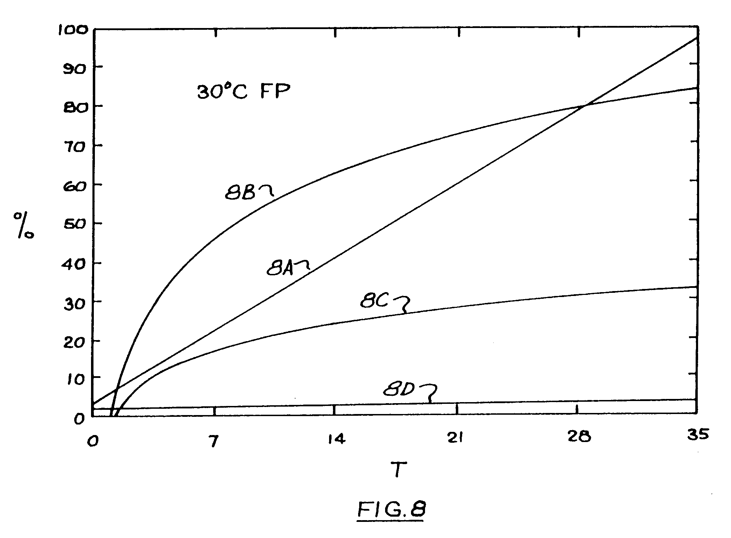

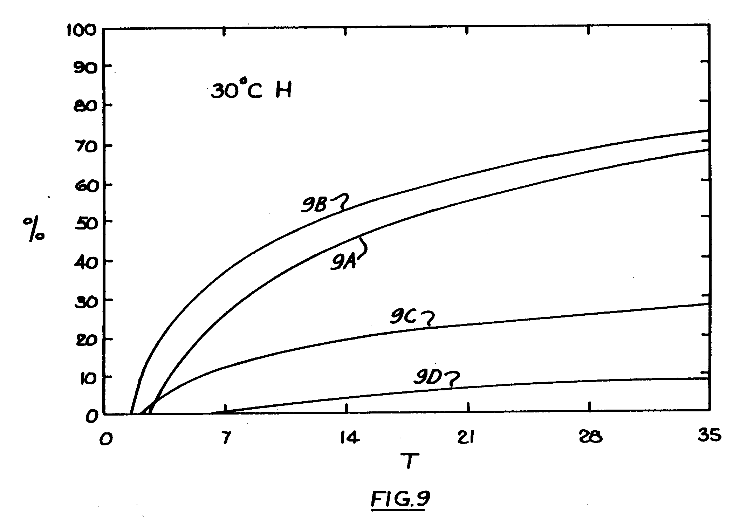

Figures 8 and 9 show the effect of increasing proportions of synthetic polymers on the degradation rate and total weight loss of four matrices in two soil moisture regimes, flood plot (FP) and high (H) at a constant soil temperature of 30°C. The results show little difference in the overall weight loss between the samples having 0 and 10% ethylene vinyl acetate respectively, but significant differences are apparent in both the rate of degradation and total weight loss exhibited by those matrices having higher amounts of ethylene vinyl acetate.

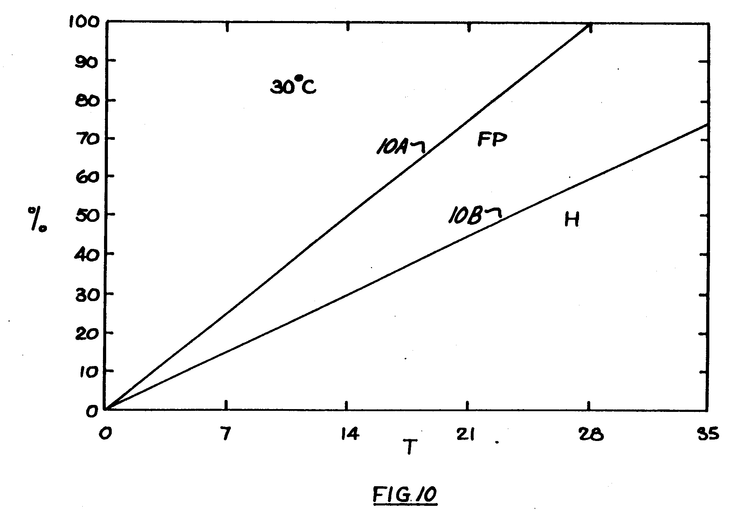

Figure 10 shows that there is not necessarily a detectable residue from a matrix having 10% synthetic polymer (chlorinated polyethlene) incorporated therein.

The nature and amount of filler may be used to control release rates. Where a water soluble filler is incorporated with the matrix, upon contact with moisture, the filler will dissolve over time, thereby creating a series of pores through which the active agent is actually released. Conversely, the incorporation of less soluble or insoluble inert fillers with the matrix reduces the release rate as the starch and active agent is "protected" from exposure to the environment and consequent dissolution.

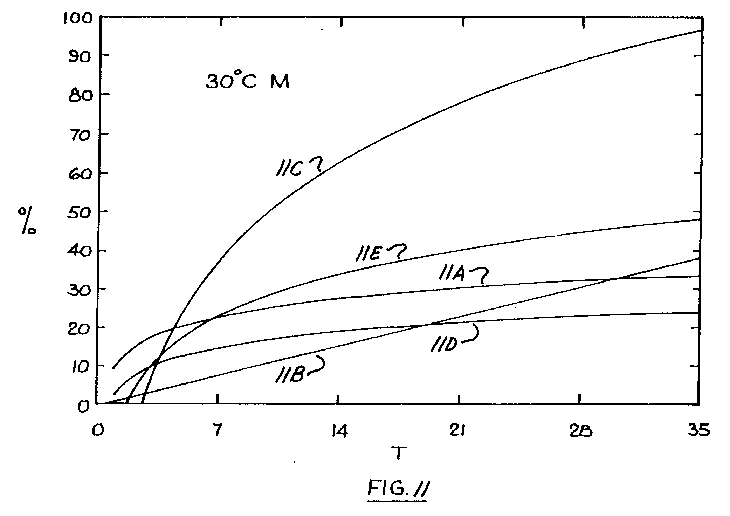

Figure 11 shows the effect of the addition of a variety of fillers on the degradation rate and total weight loss of a matrix, other factors being constant.

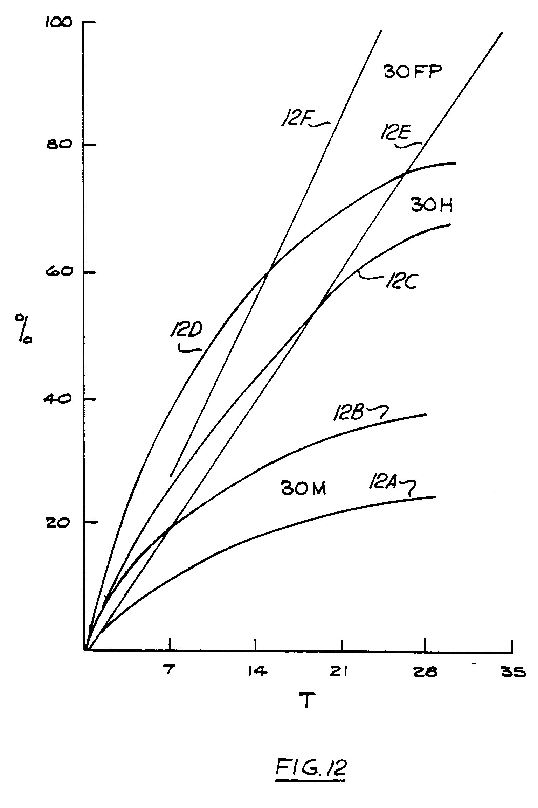

The rate of degradation and total weight loss of the matrices of figure 11 as a function of soil moisture is illustrated in the family of curves of figure 12 wherein,

a) the region between lines 12A and 12B represents the degradation rates and total weight losses of the matrices of figure 11, but excluding the formulation 11C comprising 10% $(NH_4)_2SO_4$, under medium (M) soil moisture conditions at a soil temperature of 30°C;

b) the region between lines 12C and 12D represents the degradation rates and total weight losses of the matrices of figure 11 under high (H) soil moisture conditions at a soil temperature of 30°C and

c) the region between lines 12E and 12F represents the degradation rates and total weight losses of the matrices of figure 11 under flood plot (FP) conditions at a soil temperature of 30°C.

From the figures it is evident that with the exception of the formulation comprising 10% $(NH_4)_2SO_4$, both the amount and rate of degradation and total weight loss observed for each formulation were substantially the same, regardless of the level of soil moisture present. However, the weight loss exhibited by the formulation comprising $(NH_4)_2SO_4$ suggests that degradation was not just a result of dissolution of this water soluble filler.

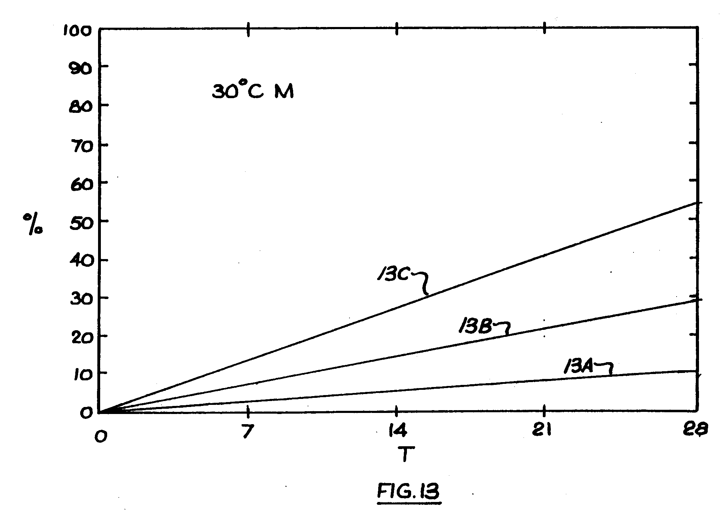

The nature of the active agent will effect its rate of release. This is because different active agents will release at different rates under the same conditions, depending upon their water solubility, partition coefficients, cohesive energy densities, molecular size and other physical and chemical properties. Figure 13 shows the variation in release rates obtained where three different active agents were compared.

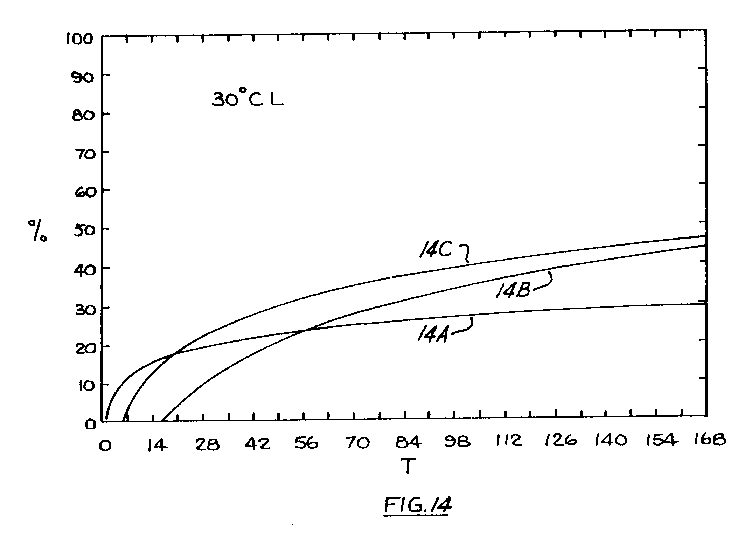

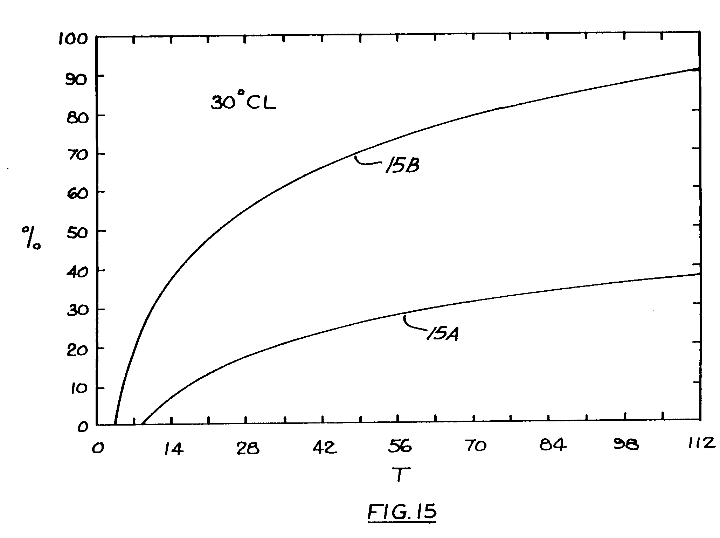

Figures 14 and 15 show that the release rate of any active agent is substantially independent of the biodegradation rate of the matrix. Figure 14 shows the cumulative % weight loss of three matrices whereas figure 15 shows the cumulative % weight loss of the respective active agents from the corresponding matrices shown in figure 14 under the same conditions.

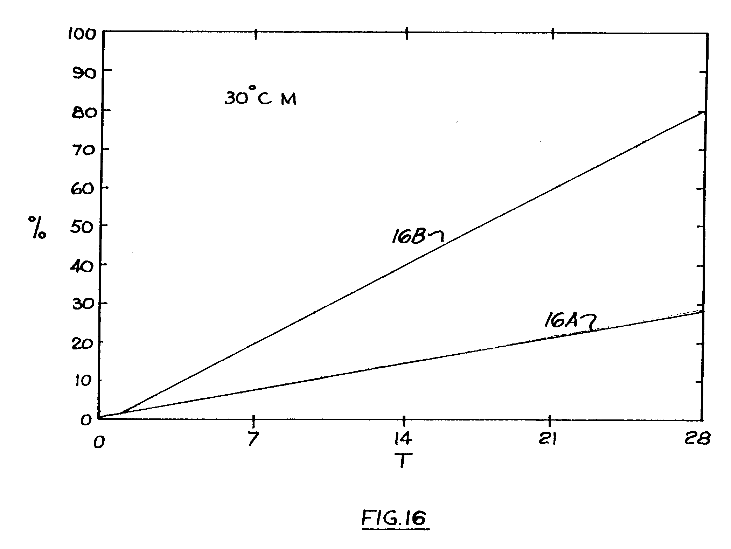

In any event, the release rate of a given active agent may be varied by the selection of different amounts of the agent or the inclusion in the formulation of release rate modifiers such as fillers, synthetic polymers and the like. Figure 16 illustrates a modification to the release rate that may be achieved by comparing the total % weight loss of an active agent from a matrix comprising about 9% w/w ammonium sulphate (16B) with the total % weight loss of the same active agent from a similar matrix (16A). That graph clearly shows that incorporation of $(NH_4)_2SO_4$ in the formulation increased the release rate of the active agent over the specified time period.

In summary, by selecting the appropriate starting materials and processing conditions, the release rates and degradation rates of the matrices according to the invention can be tailored for use in a range of environments so as to exhibit desired release rates and degradation rates.

It will be apparent that the biodegradable composition according to the present invention offers the following advantages:

(a) the biodegradable composition provides for the controlled release of an active agent therefrom into an environment over a prolonged period as required,
(b) the biodegradable composition may be tailored to exhibit a variety of release and degradation rates in a range of environments,
(c) as apparent from the figures, where desired, the active agent can be released at an initially high rate and then at a slower rate as required,
(d) the matrix is biodegradable and over a period of time will break down in an environment.

Further, the use of the biodegradable matrices in compositions according to the invention is advantageous in that they exhibit reduced toxicity behaviour when compared with the toxicity of the active agent used alone or in conventional synthetic polymeric formulations as evident from the following dermal toxicity test carried out with moistened product in accordance the United States Environmental Protection Agency data generation guidelines.

In this regard, phorate was incorporated in a biodegradable matrix in accordance with the formulation show below in table 2:

TABLE 2

| TEST | |
|---|---|
| INGREDIENT | PERCENTAGE BY WEIGHT |
| Gelose 50 | 64.5 |
| Water | 14.4 |
| Glycerol | 10.5 |
| Phorate | 10.6 |

Dermal toxicity tests using this formulation, a conventional synthetic polymer formulation comprising 10% w/w phorate and pure phorate (10% w/w) were performed on male rabbits by securing samples to the skin of the test animals for a period of 24 hours. At the expiry of this period rabbits were examined for mortality and surviving rabbits observed for 14 days before sacrifice and examination. The $LD_{50}$ values are shown below in table 3.

TABLE 3

| COMPOSITION | $LD_{50}$ DOSAGE MG PER KG BODY WEIGHT |
|---|---|
| Formulation of Table 2 | 500 - 1000 |
| Synthetic polymer formulation comprising 10% w/w phorate | 56 - 71 |
| Technical grade phorate (10% w/w) | 5.2 |

**Claims**

1. A method for manufacture of a controlled release biodegradable matrix shape containing an agriculturally active agent subject to controlled release, said method comprising the steps of:

(a) heating at a temperature of no more than about 150°C and subjecting to pressure a composition having a water content of from 2 to 30% w/w and comprising an amylaceous material having an amylose content of at least 50% by weight and selected from the group consisting of maize starch and pea starch or a derivative of said amylaceous material selected from the group consisting of amylaceous ethers, esters or a combination thereof, preferably cross-linked amylaceous ethers and esters; amylaceous alkyl succinates and starch molecules having synthetic polymer branches grafted thereon or a combination of said amylaceous material and a derivative thereof and water; so as to provide a uniform melt,

(b) forming the hot melt into a desired matrix shape, step (a) or step (b) further comprising including a filler in an amount of less than about 95% by weight, from 0 to less than or equal to 90% by weight of a synthetic polymer and optionally a plasticizer, if synthetic polymer is present, in an amount of about 20% by weight or less, and

(c) incorporating the agent in the matrix shape, the composition and forming conditions of the matrix shape being selected so as to provide a predetermined rate of biodegradation whilst the concentration and type of filler is selected so as to provide a controlled rate of release of said agent independent of said rate of biodegradation.

2. A method according to claim 1 wherein the agent is incorporated in the matrix shape by incorporating it in the composition in step (a).

3. A method according to claim 1 wherein the active agent is incorporated in the matrix shape by adding it to the hot melt prior to or during step (b) or following formation of the matrix shape.

4. A method according to any one of the preceding claims wherein the hot melt is formed into the desired matrix shape by extrusion.

5. A method according to any one of the preceding claims further comprising the step of (d) subjecting the hot melt to an atmospheric or sub-atmospheric pressure immediately prior to or during step (b) whereby to remove water from the hot melt prior to the formation of the matrix shape.

6. A method according to any one of the preceding claims wherein the amylaceous ether is a hydroxyalkyl derivative or carboxyalkyl derivative, preferably hydroxyethyl, hydroxypropyl, hydroxybutyl or carboxymethyl.

7. A method according to any one of claims 1 to 5 wherein the amylaceous ester is a saturated fatty acid derivative, preferably an acetyl or succinyl derivative.

8. A method according to any one of claims 1 to 5 wherein the amylaceous alkyl succinate is starch octenyl succinate.

9. A method according to any one of claims 1 to 5 further comprising the step of (e) crosslinking the amylaceous material or derivative thereof during or after step (b).

14

**10.** A method according to any one of the preceding claims wherein the composition of step (a) comprises less than about 20% by weight added water, most preferably from 5% to 15% by weight of added water.

**11.** A method according to any one of the preceding claims wherein the synthetic polymer is included in the composition of step (a).

**12.** A method according to claim 11 wherein the composition of step (a) comprises less than about 25% by weight of a synthetic polymer, preferably less than about 15% by weight of synthetic polymer.

**13.** A method according to any one of claims 1 to 12 wherein the synthetic polymer is included prior to or during step (b).

**14.** A method according to claim 1 wherein the synthetic polymer is added to the hot melt in an amount of less than about 25% by weight, preferably in an amount of less than about 15% by weight.

**15.** A method according to any one of claims 1 to 10 wherein in step (b), the matrix shape is co-formed with at least one layer of a synthetic polymer.

**16.** A method according to claim 15 wherein the matrix shape is co-extruded with the synthetic polymer.

**17.** A method according to any one of claims 1 to 10 wherein the matrix shape from step (b) is coated with a synthetic polymer by way of spraying or brushing.

**18.** A method according to any one of claims 1 to 17 wherein the synthetic polymer is selected from the group consisting of polyethylene including low density polyethylene, linear low density polyethylene and high density polyethylene, a copolymer of ethylene vinyl acetate, a copolymer of ethylene acrylic acid, polyvinyl chloride, polystyrene, chlorinated polyethylene, a copolymer of ethylene propylene, a copolymer of acrylic acid, polyvinyl, acetals, polyamines and urethanes.

**19.** A method according to any one of the preceding claims wherein the composition of step (a) includes the filler.

**20.** A method according to claim 19 wherein the composition comprises a filler in an amount of less than about 70% by weight of said composition.

**21.** A method according to any one of claims 1 to 20 wherein the filler is included prior to or during step (b).

**22.** A method according to claim 21 wherein the amount of filler added is less than 70% by weight of said hot melt.

**23.** A method according to any one of claims 1 to 22 wherein the filler is selected from the group consisting of metal salts, clays, carbonaceous material, dextrose, talcs, silicas and ammonium sulphate; preferably calcium carbonate, calcium sulphate, sodium carbonate, sodium sulphate, barium sulphate, kaolin, bentonite or wood flour.

**24.** A method according to any one of the preceding claims wherein the composition of step (a) includes the plasticizer in an amount of about 20% or less by weight.

**25.** A method according to any one of claims 1 to 24 wherein a plasticizer is included in an amount of about 20% or less by weight prior to or during step (b).

**26.** A method according to claim 24 or 25 wherein the plasticizer is a mono- or polyfunctional alcohol.

**27.** A method according to any one of claims 24 to 26 wherein the plasticizer is selected from the group consisting of polyethylene glycol, acetyl, glycol, glycerol, invert sugar, dioctyl phthalate, chlorinated hydrocarbons, vegetable oil, preferably soya bean oil, or combinations thereof.

**28.** A method according to any one of claims 1 to 27 further comprising the steps of:

(f) heating at a temperature of no more than about 150°C and subjecting to pressure a composition comprising the matrix shape from step (b) and water, said composition having a water content of no more than about 30% w/w, whereby to provide a uniform hot melt included in the matrix shape; and

(g) extruding the hot melt of step (f) to form a further matrix shape.

29. A method according to any one of the preceding claims wherein the active agent is selected from the group consisting of acaricides, insecticides, nematicides, herbicides, fungicides, plant growth regulants, fertilizers, trace nutrients or a combination thereof.

30. A method according to claim 29 wherein the active agent is chlorpyrifos, carbosulfan, carbofuran, phorate or diuron.

31. A method according to any one of the preceding claims wherein the active agent is added to the composition of step (a) prior to the conversion to the hot melt.

32. A method according to any one of claims 1 to 30 wherein the active agent is blended with the matrix shape from step (b) or step (g).

33. A method according to claim 32 wherein the active agent is incorporated with the matrix shape or further matrix shape by way of immerson or infusion.

34. A method according to any one of the preceding claims further comprising the step of (h) cooling or allowing the matrix shape to cool prior to incorporating the agent therewith.

35. A controlled release biodegradable matrix shape produced by the process according to any one of the preceding claims.

36. A controlled release biodegradable composition comprising a matrix formed by heating at a temperature of no more than about 150° and subjecting to pressure, a composition having a water content of from 2 to 30% w/w and comprising an amylaceous material having an amylose content of at least 50% by weight and selected from the group consisting of maize starch and pea starch or a derivative of said amylaceous material selected from the group consisting of amylaceous ethers, esters or a combination thereof, preferably cross-linked amylaceous ethers and esters; amylaceous alkyl succinates and starch molecules having synthetic polymer branches grafted thereon or a combination of said amylaceous material and derivative thereof, and water; to provide a uniform melt; from 0 to less than or equal to 25% by weight of a synthetic polymer; an agriculturally active agent subject to controlled release and selected from the group consisting of acaricides, insecticides, nematicides, herbicides, fungicides, plant growth regulants, fertilizers, trace nutrients or a combination thereof; from 0 to 20% w/w of plasticizer if synthetic polymer is present and a filler in an amount of less than about 95% by weight, the composition and forming conditions of the matrix being selected so as to provide a predetermined rate of biodegradation whilst the concentration and type of filler is selected so as to provide a controlled rate of release of said agent independent of said rate of biodegradation.

37. A controlled release biodegradable composition according to claim 36 comprising a matrix including less than about 15% by weight of a synthetic polymer.

38. A controlled release biodegradable composition according to claim 36 or claim 37 wherein the amylaceous ether is a hydroxyalkyl derivative or carboxyalkyl derivative, preferably hydroxyethyl, hydroxypropyl, hydroxybutyl or carboxymethyl.

39. A controlled release biodegradable composition according to any one of claims 36 to 38 wherein the amylaceous ester is a saturated fatty acid derivative, preferably an acetyl or succinate derivative.

40. A controlled release biodegradable composition according to claim 39 wherein the amylaceous alkyl succinate is starch octenyl succinate.

41. A controlled release biodegradable composition according to any one of claims 36 to 40 wherein the synthetic polymer is selected from the group consisting of polyethylene including low density polyethylene, linear low density polyethylene and high density polyethylene, ethylene vinyl acetate copolymers, ethylene acrylic acid copolymers, polyvinyl chlorides, polystyrenes, chlorinated polyethylenes, ethylene propylene copolymers, acrylic acid copolymers, polyvinyl acetals, polyamines and urethanes.

42. A controlled release biodegradable composition according to any one of claims 36 to 41 wherein the matrix is coated with the synthetic polymer.

43. A controlled release biodegradable composition according to any one of claims 36 to 42 wherein the active agent is chlorpyrifos, carbosulfan, carbofuran, phorate or diuron.

44. A controlled release biodegradable composition according to any one of claims 36 to 43 wherein the filler is selected from the group consisting of metal salts, clays, carbonaceous material, dextroses, talcs, silicas and ammonium sulphate, preferably calcium carbonate, calcium sulphate, sodium carbonate, sodium sulphate, barium sulphate, kaolin, bentonite or wood flour.

45. A controlled release biodegradable composition according to any one of claims 36 to 44 wherein the matrix comprises filler in an amount of less than about 70% by weight.

46. A controlled release biodegradable composition according to any one of claims 35 to 45 having a dermal $LD_{50}$ as measured on rabbits which is greater than the dermal $LD_{50}$ for said active agent as measured on rabbits.

47. A controlled release biodegradable composition as claimed in any one of claims 36 to 46 which is adapted for application to a crop growing area.

**Patentansprüche**

1. Verfahren zur Herstellung einer biodegradierbaren Matrixform zur kontrollierten Freisetzung, die ein kontrolliert freizusetzendes agrarwirtschaftlich aktives Mittel enthält, wobei das Verfahren die Schritte aufweist:

   (a) Erhitzen einer Zusammensetzung bei einer Temperatur von nicht mehr als ungefähr 150°C unter Druck, wobei die Zusammensetzung einen Wassergehalt von 2 bis 30 Gew.-% besitzt und ein stärkehaltiges Material mit einem Amylosegehalt von mindestens 50 Gew.-%, das aus der Gruppe Maisstärke und Erbsenstärke ausgewählt ist, oder ein Derivat des stärkehaltigen Materials, das ausgewählt ist aus der Gruppe, bestehend aus stärkehaltigen Ethern, Estern oder einer Kombination hiervon, bevorzugt vernetzten stärkehaltigen Ethern und Estern; oder stärkehaltige Alkylsuccinate und Stärkemoleküle mit aufgepfropften synthetischen Polymerzweigen, oder eine Kombination des stärkehaltigen Materials und einem Derivat davon und Wasser umfaßt, um eine einheitliche Schmelze zu bilden,

   (b) Formen der Schmelzmasse zu einer gewünschten Matrixform, wobei bei Schritt (a) oder Schritt (b) ferner ein Füllstoff in einer Menge von weniger als ungefähr 95 Gew.-%, ein synthetisches Polymer von 0 bis weniger oder gleich 90 Gew.-% und gegebenenfalls, wenn synthetisches Polymer vorhanden ist, ein Weichmacher in einer Menge von ungefähr 20 Gew.-% oder weniger zugefügt wird, und

   (c) Einverleiben des Mittels in die Matrixform, wobei die Zusammensetzung und die Formungsbedingungen der Matrixform so ausgewählt werden, daß eine vorgegebene Bioabbaubarkeitsrate erreicht wird, während die Konzentration und die Art des Füllstoffs so ausgewählt wird, daß eine kontrollierte Freisetzungsrate des Mittels, unabhängig von der Bioabbaubarkeitsrate, erreicht wird.

2. Verfahren nach Anspruch 1, in dem das Mittel dadurch in die Matrixform einverleibt wird, daß es in Schritt (a) in die Zusammensetzung einverleibt wird.

3. Verfahren nach Anspruch 1, in dem das aktive Mittel in die Matrixform durch Zugabe zu der Schmelzmasse vor oder während Schritt (b) oder an die Formung der Matrixform anschließend einverleibt wird.

4. Verfahren nach irgendeinem der vorhergehenden Ansprüche, in dem die Schmelzmasse durch Extrusion zur gewünschten Matrixform geformt wird.

5. Verfahren nach irgendeinem der vorhergehenden Ansprüche, mit dem weiteren Schritt (d) Aussetzen der Schmelzmasse einem Atmosphärendruck oder Unterdruck unmittelbar bevor oder während Schritt (b), wodurch Wasser aus der Schmelzmasse vor der Formung der Matrixform entfernt wird.

6. Verfahren nach irgendeinem der vorhergehenden Ansprüche, in dem der stärkehaltige Ether ein Hydroxyalkylderivat oder Carboxyalkylderivat, vorzugsweise Hydroxyethyl, Hydroxypropyl, Hydroxybutyl oder Carboxymethyl ist.

7. Verfahren nach irgendeinem der Ansprüche 1 bis 5, in dem der stärkehaltige Ester ein gesättigtes Fettsäurederivat, vorzugsweise ein Acetyl- oder Succinylderivat ist.

8. Verfahren nach irgendeinem der Ansprüche 1 bis 5, in dem das stärkehaltige Alkylsuccinat Stärkeoctenylsuccinat ist.

9. Verfahren nach irgendeinem der Ansprüche 1 bis 5, mit dem weiteren Schritt (ei Vernetzen des stärkehaltigen Materials oder Derivats hiervon während oder nach Schritt (b).

10. Verfahren nach irgendeinem der vorhergehenden Ansprüche, in dem die Zusammensetzung von Schritt (a) weniger als ungefähr 20 Gew.-% zugegebenes Wasser, bevorzugt 5 bis 15 Gew.-% zugegebenes Wasser aufweist.

11. Verfahren nach irgendeinem der vorhergehenden Ansprüche, in dem das synthetische Polymer in der Zusammensetzung von Schritt (a) enthalten ist.

12. Verfahren nach Anspruch 11, in dem die Zusammensetzung von Schritt (a) weniger als ungefähr 25 Gew.-% eines synthetischen Polymers, vorzugsweise weniger als ungefähr 15 Gew.-% synthetisches Polymer umfaßt.

13. Verfahren nach irgendeinem der Ansprüche 1 bis 12, in dem das synthetische Polymer vor oder während Schritt (b) einverleibt wird.

14. Verfahren nach Anspruch 1, in dem das synthetische Polymer der Schmelzmasse in einer Menge von weniger als ungefähr 25 Gew.-%, vorzugsweise in einer Menge von weniger als ungefähr 15 Gew.-% zugegeben wird.

15. Verfahren nach irgendeinem der Ansprüche 1 bis 10, in dem in Schritt (b) die Matrixform mit mindestens einer Schicht eines synthetischen Polymers zusammen geformt wird.

16. Verfahren nach Anspruch 15, in dem die Matrixform mit dem synthetischen Polymer koextrudiert wird.

17. Verfahren nach irgendeinem der Ansprüche 1 bis 10, in dem die Matrixform von Schritt (b) mit einem synthetischen Polymer durch Sprayen oder Streichen beschichtet wird.

18. Verfahren nach irgendeinem der Ansprüche 1 bis 17, in dem das synthetische Polymer ausgewählt ist aus der Gruppe, bestehend aus Polyethylen, einschließlich Hochdruckpolyethylen, linearem Hochdruckpolyethylen und Niederdruckpolyethylen, einem Copolymer von Ethylenvinylacetat, einem Copolymer von Ethylenacrylsäure, Polyvinylchlorid, Polystyrol, chloriertem Polyethylen, einem Copolymer von Ethylenpropylen, einem Copolymer von Acrylsäure, Polyvinylacetalen, Polyaminen und Urethanen.

19. Verfahren nach irgendeinem der vorhergehenden Ansprüche, in dem die Zusammensetzung von Schritt (a) einen Füllstoff umfaßt.

20. Verfahren nach Anspruch 19, in dem die Zusammensetzung einen Füllstoff in einer Menge von weniger als ungefähr 70 Gew.-% der Zusammensetzung umfaßt.

21. Verfahren nach irgendeinem der Ansprüche 1 bis 20, in dem der Füllstoff vor oder während Schritt (b) vorhanden ist.

22. Verfahren nach Anspruch 21,

in dem die Menge des zugegebenen Füllstoffs weniger als 70 Gew.-% der Schmelzmasse beträgt.

23. Verfahren nach irgendeinem der Ansprüche 1 bis 22, in dem der Füllstoff ausgewählt ist aus der Gruppe, bestehend aus Metallsalzen, Tonen, kohlenstoffhaltigem Material, Dextrose, Talken, Siliciumoxiden und Ammoniumsulfat; vorzugsweise Calciumcarbonat, Calciumsulfat, Natriumcarbonat, Natriumsulfat, Bariumsulfat, Kaolin, Bentonit oder Holzmehl.

24. Verfahren nach irgendeinem der vorhergehenden Ansprüche, in dem die Zusammensetzung von Schritt (a) den Weichmacher in einer Menge von ungefähr 20 Gew.-% oder weniger umfaßt.

25. Verfahren nach irgendeinem der Ansprüche 1 bis 24, in dem ein Weichmacher in einer Menge von ungefähr 20 Gew.-% oder weniger vor oder während Schritt (b) vorhanden ist.

26. Verfahren nach Anspruch 24 oder 25, in dem der Weichmacher ein mono- oder polyfunktioneller Alkohol ist.

27. Verfahren nach irgendeinem der Ansprüche 24 bis 26, in dem der Weichmacher ausgewählt ist aus der Gruppe, bestehend aus Polyethylenglykol, Acetylglykol, Glycerol, Invertzucker, Dioctylphthalat, chlorierten Kohlenwasserstoffen, Pflanzenöl, vorzugsweise Sojabohnenöl, oder Kombinationen hiervon.

28. Verfahren nach irgendeinem der Ansprüche 1 bis 27, das ferner die Schritte aufweist:

(f) Erhitzen einer Zusammensetzung bei einer Temperatur von nicht mehr als ungefähr 150°C und Ausüben von Druck auf die Zusammensetzung, die die Matrixform von Schritt (b) sowie Wasser umfaßt, wobei die Zusammensetzung einen Wassergehalt von nicht mehr als ungefähr 30 Gew.-% besitzt, um eine in der Matrixform enthaltene einheitliche Schmelzmasse zu bilden; und (g) Extrudieren der Schmelzmasse von Schritt (f), um eine weitere Matrixform zu bilden.

29. Verfahren nach irgendeinem der vorhergehenden Ansprüche, in dem das aktive Mittel ausgewählt ist aus der Gruppe, bestehend aus Akariziden, Insektiziden, Nematiziden, Herbiziden, Fungiziden, Pflanzenwachstumsregulatoren, Düngemitteln, Spurenelementen oder einer Kombination hiervon.

30. Verfahren nach Anspruch 29, in dem das aktive Mittel Chlorpyrifos, Carbosulfan, Carbofuran, Phorat oder Diuron ist.

31. Verfahren nach irgendeinem der vorhergehenden Ansprüche, in dem das aktive Mittel zur Zusammensetzung von Schritt (a) vor der Umwandlung in die Schmelzmasse zugegeben wird.

32. Verfahren nach irgendeinem der Ansprüche 1 bis 30, in dem das aktive Mittel mit der Matrixform von Schritt (b) oder Schritt (g) gemischt wird.

33. Verfahren nach Anspruch 32, in dem das aktive Mittel in die Matrixform oder die weitere Matrixform durch Eintauchen oder Eingießen einverleibt wird.

34. Verfahren nach irgendeinem der vorhergehenden Ansprüche mit dem weiteren Schritt (h) Abkühlen oder Abkühlenlassen der Matrixform vor der Einverleibung des Mittels.

35. Biodegradierbare Matrixform zur kontrollierten Freisetzung, hergestellt durch das Verfahren nach irgendeinem der vorhergehenden Ansprüche.

36. Biodegradierbare Zusammensetzung zur kontrollierten Freisetzung, umfassend eine Matrix, gebildet durch Erhitzen bei einer Temperatur von nicht mehr als ungefähr 150°C und Ausüben von Druck auf eine Zusammensetzung, die einen Wassergehalt von 2 bis 30 Gew.-% besitzt und ein stärkehaltiges Material mit einem Amylosegehalt von mindestens 50 Gew.-%, das ausgewählt ist aus der Gruppe, bestehend aus Maisstärke und Erbsenstärke, oder ein Derivat des stärkehaltigen Materials, ausgewählt aus der Gruppe, bestehend aus stärkehaltigen Ethern, Estern oder einer Kombination hiervon, bevorzugt vernetzten stärkehaltigen Ethern und Estern; stärkehaltigen Alkylsuccinaten und Stärkemolekülen mit aufgepfropften synthetischen Polymerzweigen, oder eine Kombination des stärkehaltigen Materials und einem Derivat hiervon und Wasser umfaßt, um eine einheitliche Schmelze zu bilden; ferner 0 bis weniger oder gleich 25 Gew.-% eines synthetischen Polymers; einem kontrolliert freizusetzenden agrarwirtschaftlich aktiven Mittel, ausgewählt aus der Gruppe, bestehend aus Akariziden, Insektiziden, Nematiziden, Herbiziden, Fungiziden, Pflanzenwachstumsregulatoren, Düngemitteln, Spurenelementen oder einer Kombination hiervon; 0 bis 20 Gew.-% Weichmacher, wenn ein synthetisches Polymer vorhanden ist, und einen Füllstoff in einer Menge von weniger als ungefähr 95 Gew.-%, wobei die Zusammensetzung und die Formungsbedingungen der Matrix so ausgewählt werden, daß eine vorgewählte Bioabbaubarkeitsrate erreicht wird, während die Konzentration und die Art des Füllstoffs so ausgewählt wird, daß eine kontrollierte Freisetzungsrate des Mittels, unabhängig von der Bioabbaubarkeitsrate, erreicht wird.

37. Biodegradierbare Zusammensetzung zur kontrollierten Freisetzung nach Anspruch 36, umfassend eine Matrix, die weniger als ungefähr 15 Gew.-% eines synthetischen Polymers enthält.

38. Biodegradierbare Zusammensetzung zur kontrollierten Freisetzung nach Anspruch 36 oder Anspruch 37, in der der stärkehaltige Ether ein Hydroxyalkylderivat oder Carboxyalkylderivat, vorzugsweise Hydroxyethyl, Hydroxypropyl, Hydroxybutyl oder Carboxymethyl ist.

39. Biodegradierbare Zusammensetzung zur kontrollierten Freisetzung nach irgendeinem der Ansprüche 36 bis 38, in der der stärkehaltige Ester ein gesättigtes Fettsäurederivat, vorzugsweise ein Acetyl- oder Succinatderivat ist.

40. Biodegradierbare Zusammensetzung zur kontrollierten Freisetzung nach Anspruch 39, in der das stärkehaltige Alkylsuccinat Stärkeoctenylsuccinat ist.

41. Biodegradierbare Zusammensetzung zur kontrollierten Freisetzung nach irgendeinem der Ansprüche 36 bis 40, in der das synthetische Polymer ausgewählt ist aus der Gruppe, bestehend aus Polyethylen, einschließlich Hochdruckpolyethylen, linearem Hochdruckpolyethylen und Niederdruckpolyethylen, Ethylenvinylacetat-Copolymeren, Ethylenacrylsäure-Copolymeren, Polyvinylchloriden, Polystyrolen, chlorierten Polyethylenen, Ethylenpropylen-Copolymeren, Acrylsäure-Copolymeren, Polyvinylacetalen, Polyaminen und Urethanen.

42. Biodegradierbare Zusammensetzung zur kontrollierten Freisetzung nach irgendeinem der Ansprüche 36 bis 41, in der die Matrix mit dem synthetischen Polymer beschichtet ist.

43. Biodegradierbare Zusammensetzung zur kontrollierten Freisetzung nach irgendeinem der Ansprüche 36 bis 42, in der das aktive Mittel Chlorpyrifos, Carbosulfan, Carbofuran, Phorat oder Diuron ist.

44. Biodegradierbare Zusammensetzung zur kontrollierten Freisetzung nach irgendeinem der Ansprüche 36 bis 43, in der der Füllstoff ausgewählt ist aus der Gruppe, bestehend aus Metallsalzen, Tonen, kohlenstoffhaltigem Material, Dextrose, Talken, Siliciumoxiden und Ammoniumsulfat; vorzugsweise Calciumcarbonat, Calciumsulfat, Natriumcarbonat, Natriumsulfat, Bariumsulfat, Kaolin, Bentonit oder Holzmehl.

45. Biodegradierbare Zusammensetzung zur kontrollierten Freisetzung nach irgendeinem der Ansprüche 36 bis 44, in der die Matrix Füllstoff in einer Menge von weniger als ungefähr 70 Gew.-% aufweist.

46. Biodegradierbare Zusammensetzung zur kontrollierten Freisetzung nach irgendeinem der Ansprüche 35 bis 45, die einen bei Kaninchen gemessenen dermalen $LD_{50}$ besitzt, der größer ist als der bei Kaninchen gemessene dermale $LD_{50}$ des aktiven Mittels.

47. Biodegradierbare Zusammensetzung zur kontrollierten Freisetzung nach irgendeinem der Ansprüche 36 bis 46, die zur Anwendung auf einer Anbaufläche angepaßt ist.

## Revendications

1. Procédé de fabrication d'une matrice façonnée biodégradable à libération prolongée, contenant une substance active pour l'agriculture soumise à une libération prolongée, ce procédé comprenant les étapes consistant:

    (a) à chauffer à une température ne dépassant pas environ 150°C et à soumettre à la pression une composition ayant une teneur en eau de 2 à 30% en poids/poids et comprenant une matière amylacée ayant une teneur en amylose d'au moins 50% en poids et choisie dans le groupe consistant en l'amidon de maïs et la fécule de pois ou un dérivé de cette matière amylacée choisi dans le groupe consistant en des éthers amylacés, des esters amylacés ou leur mélange, de préférence des éthers et esters amylacés réticulés; des alkylsuccinates amylacés et des molécules d'amidon portant par greffage des ramifications de polymères synthétiques, ou un mélange de cette matière amylacée et d'un dérivé de cette matière et d'eau; de manière à produire une masse fondue homogène;

(b) à faire prendre à la masse fondue la forme souhaitée d'une matrice façonnée, l'étape (a) ou l'étape (b) comprenant en outre l'inclusion d'une charge en une quantité inférieure à environ 95% en poids, une proportion allant de 0 à une valeur inférieure ou égale à 90% en poids d'un polymère synthétique et, à titre facultatif, un plastifiant, si un polymère synthétique est présent, en une quantité d'environ 20% en poids ou moins, et

(c) à incorporer la substance active à la matrice façonnée, la composition et les conditions de mise en forme de la matrice façonnée étant choisies de manière à obtenir une vitesse prédéterminée de biodégradation tandis que la concentration et la nature de la charge sont choisies de manière à obtenir une vitesse réglée de libération de la substance active indépendante de la vitesse de biodégradation en question.

2. Procédé suivant la revendication 1, dans lequel la substance active est incluse dans la matrice façonnée par son incorporation à la composition dans l'étape (a).

3. Procédé suivant la revendication 1, dans lequel la substance active est incorporée à la matrice façonnée par son addition à la masse fondue chaude avant ou pendant l'étape (b) ou après la formation de la matrice façonnée.

4. Procédé suivant l'une quelconque des revendications précédentes, dans lequel la masse fondue chaude est transformée par extrusion en la matrice façonnée désirée.

5. Procédé suivant l'une quelconque des revendications précédentes, qui comprend en outre l'étape (d) consistant à soumettre la masse fondue chaude à une pression égale ou inférieure à la pression atmosphérique immédiatement avant ou pendant l'étape (b) de manière à éliminer l'eau de la masse fondue chaude avant la formation de la matrice façonnée.

6. Procédé suivant l'une quelconque des revendications précédentes, dans lequel l'éther amylacé est un dérivé d'hydroxyalkyle ou un dérivé de carboxyalkyle, de préférence d'hydroxyéthyle, d'hydroxypropyle, d'hydroxybutyle ou de carboxyméthyle.

7. Procédé suivant l'une quelconque des revendications 1 à 5, dans lequel l'ester amylacé est un dérivé d'acide gras saturé, de préférence un dérivé d'acétyle ou de succinyle.

8. Procédé suivant l'une quelconque des revendications 1 à 5, dans lequel l'alkylsuccinate amylacé est l'octénylsuccinate d'amidon.

9. Procédé suivant l'une quelconque des revendications 1 à 5, qui comprend en outre l'étape (e) de réticulation de la matière amylacée ou de son dérivé pendant ou après l'étape (b).

10. Procédé suivant l'une quelconque des revendications précédentes, dans lequel la composition de l'étape (a) comprend moins d'environ 20% en poids d'eau ajoutée, de préférence 5 à 15% en poids d'eau ajoutée.

11. Procédé suivant l'une quelconque des revendications précédentes, dans lequel le polymère synthétique est inclus dans la composition de l'étape (a).

12. Procédé suivant la revendication 11, dans lequel la composition de l'étape (a) comprend moins d'environ 25% en poids d'un polymère synthétique, de préférence moins d'environ 15% en poids d'un polymère synthétique.

13. Procédé suivant l'une quelconque des revendications 1 à 12, dans lequel le polymère synthétique est inclus avant ou pendant l'étape (b).

14. Procédé suivant la revendication 1, dans lequel le polymère synthétique est ajouté à la masse fondue chaude en une quantité inférieure à environ 25% en poids, de préférence en une quantité inférieure à environ 15% en poids.

15. Procédé suivant l'une quelconque des revendications 1 à 10, dans lequel la matrice façonnée dans l'étape (b) est mise en forme conjointement avec au moins une couche d'un polymère synthétique.

16. Procédé suivant la revendication 15, dans lequel la matrice façonnée est coextrudée avec le polymère synthétique.

17. Procédé suivant l'une quelconque des revendications 1 à 10, dans lequel la matrice façonnée obtenue dans l'étape (b) est revêtue d'un polymère synthétique par pulvérisation ou à la brosse.

18. Procédé suivant l'une quelconque des revendications 1 à 17, dans lequel le polymère synthétique est choisi dans le groupe consistant en un polyéthylène, comprenant un polyéthylène basse densité, un polyéthylène linéaire basse densité et un polyéthylène haute densité, un copolymère d'éthylène et d'acétate de vinyle, un copolymère d'éthylène et d'acide acrylique, un polymère de chlorure de vinyle, un polystyrène, un polyéthylène chloré, un copolymère d'éthylène et de propylène, un copolymère d'acide acrylique, des polyvinylacétals, des polyamines et des uréthanes.

19. Procédé suivant l'une quelconque des revendications précédentes, dans lequel la composition de l'étape (a) contient la charge.

20. Procédé suivant la revendication 19, dans lequel la composition comprend une charge en une quantité inférieure à environ 70% en poids de cette composition.

21. Procédé suivant l'une quelconque des revendications 1 à 20, dans lequel la charge est incluse avant ou pendant l'étape (b).

22. Procédé suivant la revendication 21, dans lequel la quantité ajoutée de charge est inférieure à 70% en poids de la masse fondue chaude.

23. Procédé suivant l'une quelconque des revendications 1 à 22, dans lequel la charge est choisie dans le groupe consistant en des sels métalliques, des argiles, une matière carbonée, le dextrose, des talcs, des silices et le sulfate d'ammonium; de préférence le carbonate de calcium, le sulfate de calcium, le carbonate de sodium, le sulfate de sodium, le sulfate de baryum, le kaolin, la bentonite ou la farine de bois.

24. Procédé suivant l'une quelconque des revendications précédentes, dans lequel la composition de l'étape (a) contient le plastifiant en une quantité d'environ 20% en poids ou moins.

25. Procédé suivant l'une quelconque des revendications 1 à 24, dans lequel un plastifiant est inclus en une quantité de 20% en poids ou moins avant ou pendant l'étape (b).

26. Procédé suivant la revendication 24 ou 25, dans lequel le plastifiant est un alcool monofonctionnel ou polyfonctionnel.

27. Procédé suivant l'une quelconque des revendications 24 à 26, dans lequel le plastifiant est choisi dans le groupe consistant en polyéthylène-glycol, acétyl-glycol, glycérol, sucre inverti, phtalate de dioctyle, hydrocarbures chlorés, huile végétale, de préférence huile de soja, ou des mélanges de ces plastifiants.

28. Procédé suivant l'une quelconque des revendications 1 à 7, qui comprend en outre les étapes consistant:

(f) à chauffer à une température non supérieure à environ 150°C et à soumettre à la pression une composition comprenant la matrice façonnée venant de l'étape (b) et de l'eau, cette composition ayant une teneur en eau non supérieure à environ 30% en poids/poids, de manière à obtenir une masse fondue chaude homogène incluse dans la matrice façonnée; et
(g) à extruder la masse fondue chaude de l'étape (f) pour former une autre matrice façonnée.

29. Procédé suivant l'une quelconque des revendications précédentes, dans lequel la substance active est choisie dans le groupe consistant en acaricides, insecticides, nématicides, herbicides, fongicides, régulateurs de croissance des plantes, engrais, substances nutritives à l'état de traces ou un mélange de ces substances.

30. Procédé suivant la revendication 29, dans lequel la substance active consiste en chlorpyrifos, carbosulfan, carbofuran, phorate ou diuron.

31. Procédé suivant l'une quelconque des revendications précédentes, dans lequel la substance active est ajoutée à la composition de l'étape (a) avant la transformation en la masse fondue chaude.

32. Procédé suivant l'une quelconque des revendications 1 à 30, dans lequel la substance active est mélangée avec la matrice façonnée venant de l'étape (b) ou de l'étape (g).

33. Procédé suivant la revendication 32, dans lequel la substance active est incorporée par immersion ou par infusion à la matrice façonnée ou à l'autre matrice façonnée.

34. Procédé suivant l'une quelconque des revendications précédentes, qui comprend en outre l'étape (h) consistant à refroidir ou à laisser refroidir la matrice façonnée avant d'y incorporer la substance active.

35. Matrice façonnée biodégradable à libération prolongée, obtenue par le procédé suivant l'une quelconque des revendications précédentes.

36. Composition biodégradable à libération prolongée, comprenant une matrice formée par chauffage à une température ne dépassant pas environ 150°C et exposition à une pression d'une composition ayant une teneur en eau de 2 à 30% en poids/poids et comprenant une matière amylacée ayant une teneur en amylose d'au moins 50% en poids et choisie dans le groupe consistant en l'amidon de maïs et la fécule de pois ou un dérivé de cette matière amylacée choisi dans le groupe consistant en des éthers amylacés, des esters amylacés ou leur mélange, de préférence des éthers et esters amylacés réticulés, des alkylsuccinates amylacés et des molécules d'amidon portant des ramifications greffées de polymères synthétiques ou une association de cette matière amylacée et de son dérivé, et de l'eau; pour obtenir une masse fondue homogène; de 0 à une valeur inférieure ou égale à 25% en poids d'un polymère synthétique, une substance active pour l'agriculture soumise à une libération prolongée et choisie dans le groupe consistant en acaricides, insecticides, nématicides, herbicides, fongicides, régulateurs de croissance des plantes, engrais, substances nutritives à l'état de traces ou un mélange de ces substances; 0 à 20% en poids/poids de plastifiant si un polymère synthétique est présent, et une charge en une quantité de moins d'environ 95% en poids, la composition et les conditions de mise en forme de la matrice étant choisies de manière à obtenir une vitesse prédéterminée de biodégradation, tandis que la concentration et 1a nature de la charge sont choisies de manière à obtenir une vitesse réglée de libération de la substance active indépendante de cette vitesse de biodégradation.

37. Composition biodégradable à libération prolongée suivant la revendication 36, qui comprend une matrice contenant moins d'environ 15% en poids d'un polymère synthétique.

38. Composition biodégradable à libération prolongée suivant la revendication 36 ou la revendication 37, dans laquelle l'éther amylacé est un dérivé d'hydroxyalkyle ou un dérivé de carboxyalkyle, de préférence d'hydroxyéthyle, d'hydroxypropyle, d'hydroxybutyle ou de carboxyméthyle.

39. Composition biodégradable à libération prolongée suivant l'une quelconque des revendications 36 à 38, dans laquelle l'ester amylacé est un dérivé d'acide gras saturé, de préférence un dérivé d'acétyle ou de succinate.

40. Composition biodégradable à libération prolongée suivant la revendication 39, dans laquelle l'alkylsuccinate amylacé est l'octénylsuccinate d'amidon.

41. Composition biodégradable à libération prolongée suivant l'une quelconque des revendications 36 à 40, dans laquelle le polymère synthétique est choisi dans le groupe consistant en polyéthylène comprenant un polyéthylène basse densité, un polyéthylène linéaire basse densité et un polyéthylène haute densité, des copolymères d'éthylène et d'acétate de vinyle, des copolymères d'éthylène et d'acide acrylique, des polymères de chlorure de vinyle, des polystyrènes, des polyéthylènes chlorés, des copolymères d'éthylène et de propylène, des copolymères d'acide acrylique, des polyvinylacétals, des polyamines et des uréthanes.

42. Composition biodégradable à libération prolongée suivant l'une quelconque des revendications 36 à 41, dans laquelle la matrice est revêtue du polymère synthétique.

43. Composition biodégradable à libération prolongée suivant l'une quelconque des revendications 36 à 42, dans laquelle la substance active consiste en chlorpyrifos, carbosulfan, carbofuran, phorate ou diuron.

44. Composition biodégradable à libération prolongée suivant l'une quelconque des revendications 36 à 43, dans laquelle la charge est choisie dans le groupe consistant en sels métalliques, argiles, matière carbonée, dextroses, talcs, silices et sulfate d'ammonium, de préférence carbonate de calcium, sulfate de calcium, carbonate de sodium, sulfate de sodium, sulfate de baryum, kaolin, bentonite ou farine de bois.

45. Composition biodégradable à libération prolongée suivant l'une quelconque des revendications 36 à 44, dans laquelle la matrice comprend une charge en une quantité inférieure à environ 70% en poids.

46. Composition biodégradable à libération prolongée suivant l'une quelconque des revendications 35 à 45, ayant une $DL_{50}$ dermique, mesurée sur des lapins, supérieure à la $DL_{50}$ dermique mesurée sur des lapins pour cette substance active.

47. Composition biodégradable à libération prolongée suivant l'une quelconque des revendications 36 à 46, qui est conçue pour être appliquée à une aire d'agriculture.

FIG. 1.

_FIG. 2_

FIG. 3

*FIG.4*

EP 0 491 813 B1

FIG.5

EP 0 491 813 B1

FIG. 6

EP 0 491 813 B1

FIG.7

EP 0 491 813 B1

FIG.8

EP 0 491 813 B1

EP 0 491 813 B1

FIG.9

FIG. 10

EP 0 491 813 B1

FIG.11

FIG. 12

FIG. 13

EP 0 491 813 B1

FIG. 14

EP 0 491 813 B1

FIG.15

30°CL

15B

15A

EP 0 491 813 B1

FIG.16